# EUROPEAN PATENT SPECIFICATION

(11) **EP 1 493 691 B1**
(45) Date of publication and mention of the grant of the patent: **28.02.2007**
(21) Application number: 04253465.1
(22) Date of filing: 10.06.2004
(51) Int. Cl.: B65G 15/20, B65G 29/02

(54) **Belt drive assembly for container inspection machine**
Riemenantrieb für ein Behälterinspektionssystem
Ensemble d'entraînement par courroie pour dispositif de récipients

(30) Priority: 30.06.2003 US 610234
(43) Date of publication of application: 05.01.2005
(73) Proprietor: Emhart Glass S.A., 6330 Cham (CH)
(72) Inventor: Raupp, Henry F., Freeville, New York 13068 (US)
(74) Representative: Warren, Anthony Robert

(56) References cited:
- WO-A-97/46329
- US-A- 3 901 381
- US-A- 5 422 476
- US-A- 5 624 021
- US-A- 5 823 317
- US-A- 6 109 426
- US-B1- 6 390 282

## Description

The present invention relates to machines which inspect containers such as bottles for defects, and more particularly to such machines wherein a bottle is conveyed through one or more inspection stations via a belt conveyor having opposed pairs of belts.

A state of the art glass bottle inspection machine wherein the bottles are transported through a number of inspection stations by a belt drive mechanism having opposed pairs of horizontal belts is disclosed in US-A-5,422,476.

It is an object of the present invention to provide an improved belt drive for such machines.

According to the present invention, there is provided a conveyor system for a machine for inspecting containers as defined in claim 1.

The invention also consists in a machine for inspecting containers incorporating a conveyor system as above defined.

The present invention will now be described with reference to the accompanying drawings which illustrate a presently preferred embodiment incorporating the principles of the invention, and in which:
Figure 1 is a schematic oblique view of an inspection machine for inspecting bottles made in accordance with the teachings of the present invention;
Figure 2 is an oblique view of the belt drive assembly of the machine illustrated in Figure 1, in its large ware configuration;
Figure 3 is an oblique view of a guide wheel assembly for one of the opposed belt drives;
Figure 4 is an oblique view of the belt drive assembly housing including the open/close step motors;
Figure 5 is a bottom view of a belt drive unit; and
Figure 6 is an oblique view of the belt drive assembly illustrated in Figure 2, in its mini ware configuration.

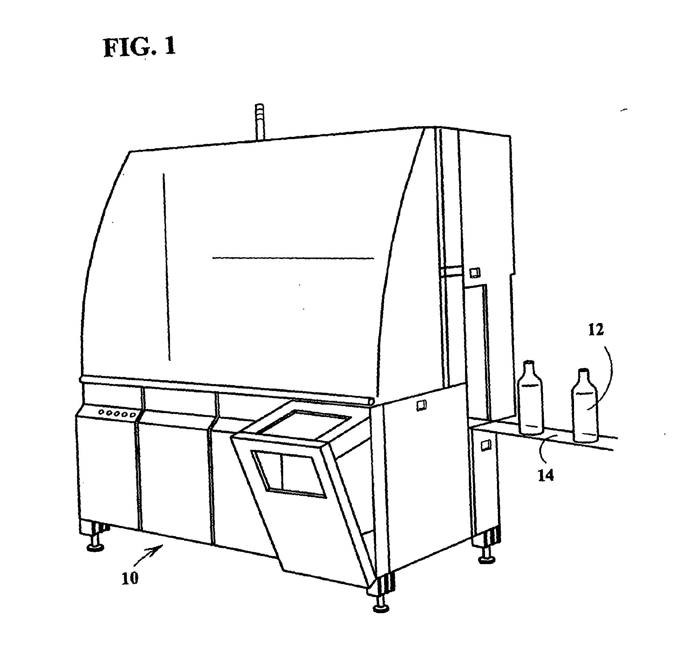

Figure 1 is a schematic showing of an inspection machine 10 which inspects a row of bottles 12 conveyed to the machine by an infeed conveyor 14. Any of a variety of inspections can be carried out by the machine.

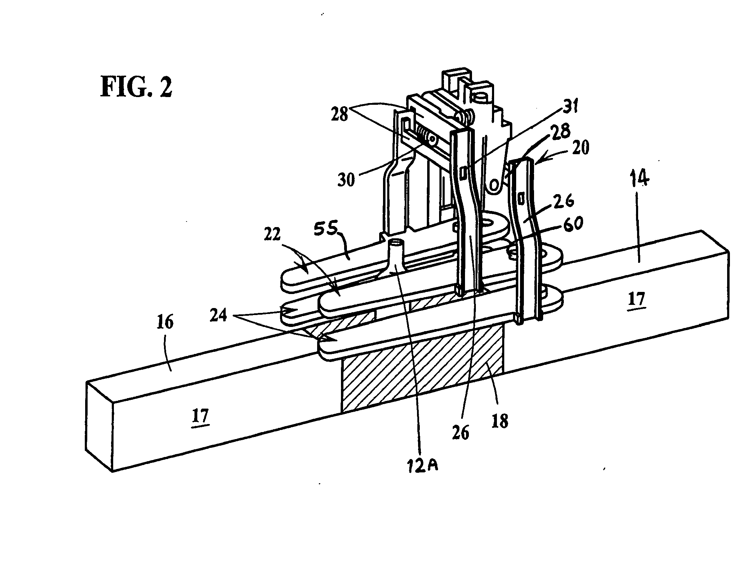

Figure 2 illustrates the belt conveyor mechanism 20 for this machine which receives, i.e. picks up, bottles from the infeed conveyor 14, conveys them through one or more inspection locations, and releases them to a discharge conveyor 16. The infeed and discharge conveyors have front guards 17 which, together with a front guard 18 for the inspection equipment (light sources, cameras, etc.), define the front face of the infeed/discharge conveyor system.

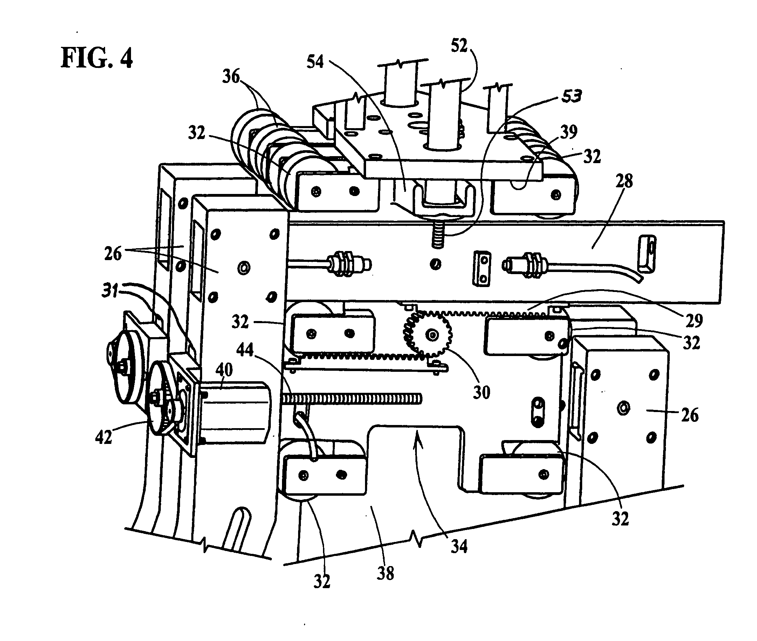

As can be seen, the belt conveyor mechanism has an upper opposed pair of belt drives 22 and a lower opposed pair of belt drives 24. Each of the belt drives 22, 24 is cantilevered from a generally vertical or upwardly extending strut 26 which is integral with a horizontal slide member 28. The two slide members of the upper/lower opposed pair of belt drives each include a rack portion 29 (one shown in Figure 4) which is operatively associated with an idler pinion 30.

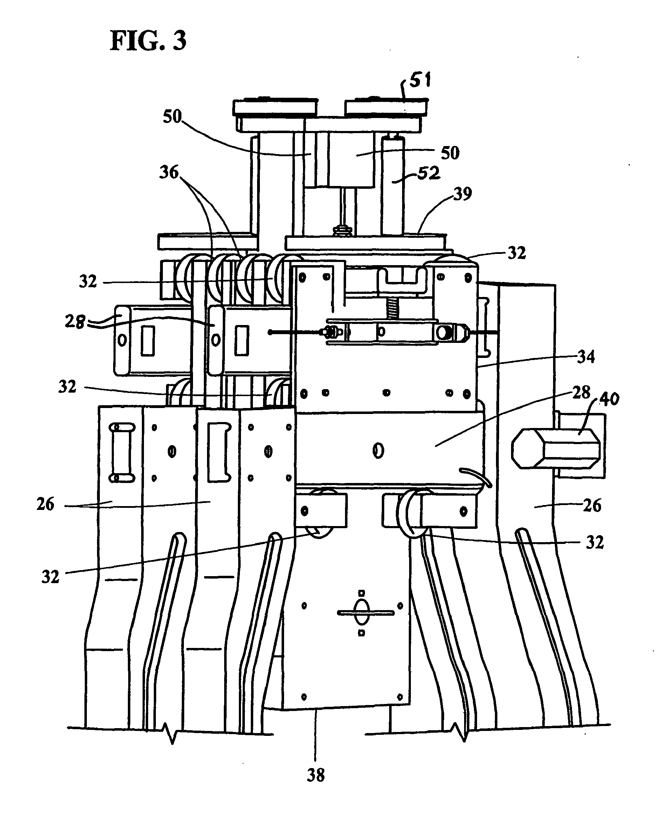

The two slide members 28 of an opposed pair of belt drives are supported for lateral displacement by three pairs of rollers 32 (Figures 3 and 4) which are mounted on a vertically displaceable carriage 34. The top slide member is supported between the top and middle roller pair and the bottom slide member (shown in Figure 3 but omitted from Figure 4 from below the lower rack portion 5 to reveal otherwise concealed components) is supported between the middle and bottom roller pairs. A slide member 28 can enter a suitable hole 31 in an associated opposed strut 26 when the opposed pair of belt drives is closed towards each other. The carriage 34 also supports upper and lower opposed pairs of rollers 36 which are captured by outer tracks (not shown) on a housing 38 (Figure 4) which is secured to the machine frame to depend over the inspection area, thus mounting the carriage for vertical displacement relative to the housing 38.

When an open/close step motor 40 is operated (there is a motor for each opposed pair of belt drives), a pulley 42 drives a screw 44 which is threadedly received by a corresponding nut secured within the lower slide member (not shown in Figure 4) which displaces the lower slide member and the attached strut. This displacement will be mirrored by the associated upper slide member and its opposed belt drive, since the upper and lower rack portions of the slide members are coupled together via the idler pinion 30. Operation of an open/close motor will accordingly conjointly horizontally displace the associated opposed upper or lower belt drives either towards or away from each other.

In addition to, or instead of, providing the motors 40 and screws 42 to displace the belt drives towards and/or away from each other, the displacement may be effected or supplemented by driving the associated pinions 30.

The housing 38 is integral with a mounting 39 which is secured to the machine frame, and mounted on the housing are a pair of up/down motors 50. One motor is associated with the upper drive belts and the other is associated with the lower drive belts. Each motor 50 operates a pulley 51 which rotatably drives a screw 53 which is operatively received by an elongated nut 52 which is joined to the carriage 34 via a bracket 54.

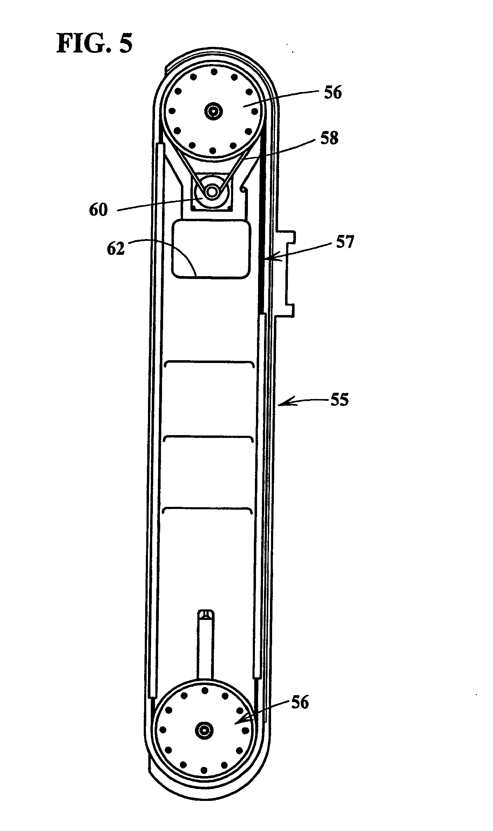

Each belt drive (Fig. 5) has a casing or arm 55 which supports a pulley 56 at either end of the arm. These pulleys support a belt 57 which is driven via a timing belt 58 interconnecting one of these pulleys with a step motor drive 60. The other pulley 56 is an idler pulley. The step motor is mounted on top of the casing as shown in Fig. 2. The step motor for a lower belt drive is mounted on the top surface of the lower casing so that it can enter a pocket or cutout 62 defined in the upper casing. To facilitate vertical displacement, each assembly is counterbalanced to substantially remove the weight of the assembly.

Figure 2 shows the upper and lower belt drive pairs being located in a large ware 12A configuration with the upper and lower belt drives being vertically stacked.

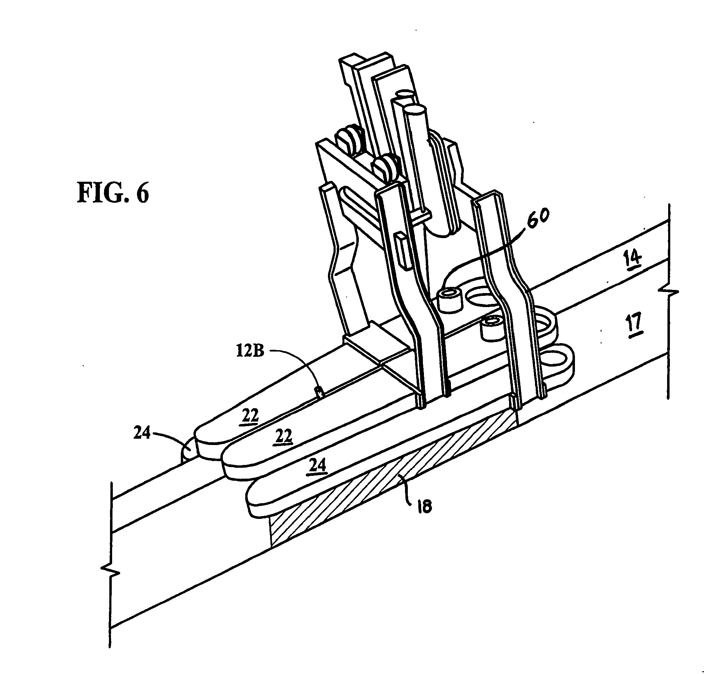

Figure 6 illustrates the location of the upper and lower drive belt pairs in a small or mini ware 12B configuration. To reach this configuration the upper belt drive pair is elevated to separate the vertically adjacent belt drives so that they can be displaced relatively horizontally (the top of the motor on the lower drive is clear of the upper casing). The lower belt drive pair is horizontally separated to the location where both lower belt drives are horizontally cleared of the front wall 17,18 and rear of the conveyor. The lower belt drives are then lowered until the top of the belt drive (its motor) is below the surface of the infeed/outfeed conveyors 14. Finally, the upper drive belt pair is now lowered to a location where the casing is just above the top surface of the conveyor 14. Now the drive belts of the upper drive belt pair can be located adjacent the sidewall of mini ware 12B.

## Claims

1. A conveyor system for a machine for inspecting containers, comprising
an infeed conveyor (14) for delivering containers to a pick up location,
a belt drive conveyor mechanism (20) for picking up a container at the pick up location and delivering the picked up container to a release position,
a discharge conveyor (16) for receiving a container delivered to the release position,
said belt drive conveyor mechanism comprising upper (22) and lower (24) opposed pairs of belt drive assemblies, **characterised in that** each belt drive assembly includes
a belt drive casing (55),
belt supporting means (56) mounted on said belt drive casing, said belt supporting means having a drivable member (58), and
motor means (60) mounted on said casing for driving said drivable member.

2. A conveyor system according to claim 1, wherein said motor means is a step motor (60).

## Patentansprüche

1. Fördersystem für eine Maschine zum Prüfen von Behältern, umfassend einen Einlaufförderer (14) zum Liefern von Behältern an eine Aufnahmestation,
einen Riemenantriebsfördermechanismus (20) zum Aufnehmen eines Behälters an der Aufnahmestation und zum Liefern des aufgenommenen Behälters an eine Freigabeposition,
einen Ausgabeförderer (16) zum Empfangen eines Behälters, der an die Freigabeposition geliefert wurde, wobei
der Riemenantriebsfördermechanismus obere (22) und untere (24) gegenüber liegende Paare von Riemenantriebsanordnungen umfasst, **dadurch gekennzeichnet, dass** jede Riemenantriebsanordnung
ein Riemenantriebsgehäuse (55) umfasst sowie
eine Riementrageeinrichtung (56), die am Riemenantriebsgehäuse befestigt ist, wobei die Riementrageeinrichtung ein antreibbares Element (58) aufweist, und
eine Motoreinrichtung (60), die am Gehäuse zum Antreiben des antreibbaren Elementes befestigt ist.

2. Fördersystem nach Anspruch 1, wobei der Motor ein Schrittmotor (60) ist.

## Revendications

1. Un système de convoyeur pour une machine d'inspection de récipients, comprenant :
un convoyeur d'alimentation (14) pour fournir des récipients à un emplacement de prélèvement,
un mécanisme convoyeur à entraînement par courroie (20) pour prélever un récipient à l'emplacement de prélèvement et fournir le récipient prélevé à une position de libération,
un convoyeur de décharge (16) pour recevoir un récipient délivré à la position de libération,
ledit mécanisme convoyeur à entraînement par courroie comprenant des paires supérieure (22) et inférieure (24) opposées d'ensembles d'entraînement par courroie, **caractérisé en ce que** chaque ensemble d'entraînement par courroie comprend:
un boîtier d'entraînement par courroie (55),
des moyens support de courroie (56) montés sur ledit boîtier d'entraînement de courroie, lesdits moyens de support de courroie comprenant un organe (58) susceptible d'être entraîné, et
des moyens de motorisation (60), montés sur ledit boîtier pour entraîner ledit organe susceptible d'être entraîne.

2. Un système convoyeur selon la revendication 1, dans lequel lesdits moyens de motorisation sont constitués d'un moteur pas à pas (60).
